# EUROPÄISCHE PATENTSCHRIFT

(11) **EP 4 377 110 B1**
(45) Veröffentlichungstag und Bekanntmachung des Hinweises auf die Patenterteilung: **01.04.2026**
(21) Anmeldenummer: 22757927.3
(22) Anmeldetag: 27.07.2022
(51) Int. Cl.: B60J 5/04

(54) **SICHERHEITSEINRICHTUNG FÜR EIN FAHRZEUG, FAHRZEUG**
SAFETY DEVICE FOR A VEHICLE, AND VEHICLE
DISPOSITIF DE SÉCURITÉ POUR UN VÉHICULE, ET VÉHICULE

(30) Priorität: 29.07.2021 DE 102021208182
(43) Veröffentlichungstag der Anmeldung: 05.06.2024
(73) Patentinhaber: VOLKSWAGEN AKTIENGESELLSCHAFT, 38440 Wolfsburg (DE)
(72) Erfinder: BLADECK, Frank, 38551 Ribbesbüttel (DE); BULSINK, Rogier, 38527 Meine (DE); ESPICH, Michael, 38458 Velpke (DE); HENTRICH, Manuel, 49201 Dissen am Teutoburger Wald (DE); KUPKE, Jens, 38524 Sassenburg (DE); PETERS, Gunnar, 38444 Wolfsburg (DE); WEBER, Stefan, 38122 Braunschweig (DE)
(86) Internationale Anmeldenummer: PCT/EP2022/071048
(87) Internationale Veröffentlichungsnummer: WO 2023/006806

(56) Entgegenhaltungen:
- DE-A1- 4 342 038
- FR-A1- 2 207 039

## Beschreibung

Die Erfindung betrifft eine Sicherheitseinrichtung für ein Fahrzeug, insbesondere Kraftfahrzeug, mit einer Tür, die an einer Karosserie des Fahrzeugs, insbesondere zum Freigeben und Verschließen einer Türöffnung der Karosserie, verlagerbar angeordnet ist, mit einem an einem Halteabschnitt seitlich von der Karosserie in Richtung der Tür vorstehenden Crashbolzen und mit einer an der Tür angeordneten und zur bereichsweisen Aufnahme des Crashbolzens ausgebildeten Aussparung.

Weiterhin betrifft die Erfindung ein Fahrzeug mit der oben beschriebenen Sicherheitseinrichtung.

Sicherheitseinrichtungen der eingangs genannten Art sind aus dem Stand der Technik bereits bekannt. So offenbart beispielsweise die Offenlegungsschrift KR 20070084667 A eine Sicherheitseinrichtung von einem Kraftfahrzeug, bei welcher karosserieseitig ein Crashbolzen vorhanden ist, der mit einer türseitigen Aussparung zusammenwirkt, um bei einem Seitenaufprall beziehungsweise bei einem Seitencrash zu verhindern, dass die Tür in den Fahrzeuginnenraum eingedrückt werden kann. Durch das Eingreifen des Crashbolzens in der Aussparung wird die Tür an der Karosserie zusätzlich zurückgehalten und am Eindringen in den Fahrzeuginnenraum gehindert. Die Aussparung ist dabei in einem Verstärkungsblech der Fahrzeugtür ausgebildet, sodass der Crashbolzen mit dem Verstärkungselement bei einem Crashfall zusammenwirkt.

Weitere Sicherheitseinrichtungen sind aus den Offenlegungsschriften DE 43 42 038 A1 und FR 2 207 039 A1 bekannt.

Der Erfindung liegt die Aufgabe zugrunde, eine verbesserte Sicherheitseinrichtung zu schaffen, die insbesondere eine erhöhte Stabilität bietet und insbesondere Komfortvorteile für einen Benutzer des Fahrzeugs mit sich bringt.

Die der Erfindung zugrundeliegende Aufgabe wird durch eine Sicherheitseinrichtung mit den Merkmalen des Anspruchs 1 gelöst. Sie zeichnet sich dadurch aus, dass der Crashbolzen an der Karosserie befestigt und an der Tür ein sich zumindest im Wesentlichen über die gesamte Länge der Tür erstreckendes Crashelement angeordnet ist, das dazu ausgebildet ist, sich bei einem Seitencrash mit einem ersten Ende, das die Aussparung aufweist, an dem Halteabschnitt der Karosserie abzustützen. Die erfindungsgemäße Sicherheitseinrichtung hat den Vorteil, dass der Crashbolzen mit einem Crashelement zusammenwirkt, das sich zumindest im Wesentlichen über die gesamte Türlänge erstreckt, sodass hohe Kräfte vorteilhaft übertragen und abgebaut werden können, ohne dass sich die Tür in den Fahrzeuginnenraum hinein deformiert. Dadurch, dass der Crashbolzen direkt an der Karosserie angeordnet beziehungsweise an dieser befestigt ist, ist der Crashbolzen außerdem besonders sicher an dem Kraftfahrzeug gehalten und leitet die Unfallkräfte direkt in die Fahrzeugkarosserie ein. Dadurch, dass sich das Crashelement zumindest im Wesentlichen über die gesamte Länge der Tür erstreckt, also über die gesamte Länge oder nahezu die gesamte Länge der Tür, ergibt sich, dass das Crashelement sich von einem Türrand bis zu einem gegenüberliegenden oder benachbarten Türrand erstreckt und dadurch eine hohe Stabilität in die Tür einbringt. Bevorzugt ist die Tür an der Karossiere verschwenkbar, insbesondere um eine Vertikal- oder Horizontalachse, und/oder verschiebbar gelagert.

Weiterhin ist erfindungsgemäß vorgesehen, dass an der Karosserie ein Verkleidungsteil angeordnet ist, das den Crashbolzen verdeckt und von dem Crashbolzen bei einem Seitencrash durchdringbar ist, sodass der Crashbolzen in die Aufnahme gelangt. Durch das Verkleidungsteil ist der Crashbolzen somit im Normalfall versteckt angeordnet, was zum einen optische Vorteile bietet und zum anderen auch den Benutzer davor schützt, beispielsweise beim Einsteigen mit einem Kleidungsteil, wie einem Mantel oder dergleichen, an dem Crashbolzen hängen zu bleiben und dabei oder durch anschließendes Schließen der Tür das Kleidungsteil zu beschädigen.

Weiterhin ist bevorzugt vorgesehen, dass zusätzlich oder alternativ an der Tür ein Innenverkleidungsteil angeordnet ist, das das Crashelement verdeckt und von dem Crashbolzen bei einem Seitencrash durchdringbar ist, sodass der Crashbolzen in die Aufnahme gelangt. Somit ist auch die Aussparung zunächst nicht sichtbar und beispielsweise vor äußeren Einflüssen geschützt. So verhindert die Innenverkleidung beispielsweise, dass Kleinteile oder Schmutz in die Aussparung gelangen kann, der anschließend die Wirkung des in die Aussparung eingreifenden Crashbolzens mindern könnte. Auch wird dadurch die Tür vor Wassereinlagerungen und Korrosion geschützt.

Gemäß einer bevorzugten Ausführungsform der Erfindung verläuft das Verkleidungsteil zumindest in dem Halteabschnitt zumindest im Wesentlichen parallel zu dem Innenverkleidungsteil der Tür. Dadurch ist ein enges Anliegen der Tür im Bereich des Halteabschnitt an der Karosserie des Kraftfahrzeugs gewährleistet.

Weiterhin ist bevorzugt vorgesehen, dass der Crashbolzen eine der Tür zugewandte Schneidspitze zum Schneiden des Verkleidungselements und/oder des Innenverkleidungsteils bei einem Seitencrash aufweist. Die Schneidspitze zeichnet sich insbesondere durch eine Schneidkante oder -klinge aus, die am freien Ende des Crashbolzens ausgebildet ist. Insbesondere ist die Schneidspitze einstückig mit dem Crashbolzen beziehungsweise in den Crashbolzen integriert ausgebildet. Dazu weist der Crashbolzen beispielsweise an seinem freien Ende eine Keilform auf.

Vorzugsweise ist der Crashbolzen an oder in der Nähe von einer Fahrzeugsäule angeordnet. Dadurch ist gewährleistet, dass hohe Kräfte in die Karosserie des Kraftfahrzeugs bei einem Seitencrash übertragen werden können.

Insbesondere ist die Tür an einer ersten Fahrzeugsäule der Karosserie verschwenkbar gelagert und der Crashbolzen an einer zweiten Fahrzeugsäule des Fahrzeugs angeordnet. Dadurch ist der Crashbolzen entfernt zu der Schwenklagerung der Tür an der Karosserie angeordnet, wodurch Seitenaufprallkräfte einerseits durch die Schwenklagerung und andererseits durch den Crashbolzen sicher aufgenommen werden können. Insbesondere handelt es sich bei der zweiten Fahrzeugsäule um eine zu der ersten Fahrzeugsäule benachbarte Fahrzeugsäule.

Weiterhin ist bevorzugt vorgesehen, dass der Crashbolzen im Übergang der Fahrzeugsäule zu einem Längsträger der Karosserie liegt. Dadurch liegt der Crashbolzen in einem hoch belastbaren Bereich der Karosserie, sodass hohe Kräfte bei einem Seitenaufprall aufgenommen werden können, ohne dass die Tür in den Fahrzeuginnenraum gedrückt wird. Auch bei einer Ausführungsform, bei welcher die Tür nicht an der ersten Fahrzeugsäule verschwenkbar und der Crashbolzen an der zweiten Fahrzeugsäule angeordnet ist, sondern bei welcher die Fahrzeugtür beispielsweise an der Karosserie, insbesondere an einem Längsträger zwischen benachbarten Fahrzeugsäulen der Karosserie verschiebbar gelagert ist, ist der Crashbolzen bevorzugt im Übergang von einer der Fahrzeugsäulen zu dem Längsträger der Karosserie angeordnet.

Vorzugsweise ist das Crashelement geneigt zu dem Längsträger ausgerichtet. Durch die geneigte Ausrichtung verläuft das Crashelement insbesondere von dem Übergangsbereich der Fahrzeugsäule zu dem Längsträger zu einem gegenüberliegenden Abschnitt der Tür, der insbesondere oberhalb des Längsträgers liegt, beispielsweise auf der mittleren Höhe der Tür oder zwischen Scharnieren, durch welche die Tür an der Karosserie schwenkbar gelagert ist. Somit ist eine vorteilhafte Krafteinleitung und Schutzwirkung gewährleistet.

Das erfindungsgemäße Fahrzeug mit den Merkmalen des Anspruchs 9 zeichnet sich durch die erfindungsgemäße Sicherheitseinrichtung aus. Es ergeben sich die zuvor bereits genannten Vorteile.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnung näher erläutert werden. Dazu zeigen
- Figur 1: ein Kraftfahrzeug in einer vereinfachten Seitenansicht,
- Figur 2: eine erste Detailansicht des Kraftfahrzeugs,
- Figur 3: eine zweite Detailansicht des Kraftfahrzeugs, und
- Figuren 4A und 4B: eine Schnittdarstellung des Kraftfahrzeugs im Bereich einer vorteilhaften Sicherheitseinrichtung in unterschiedlichen Betriebszuständen.

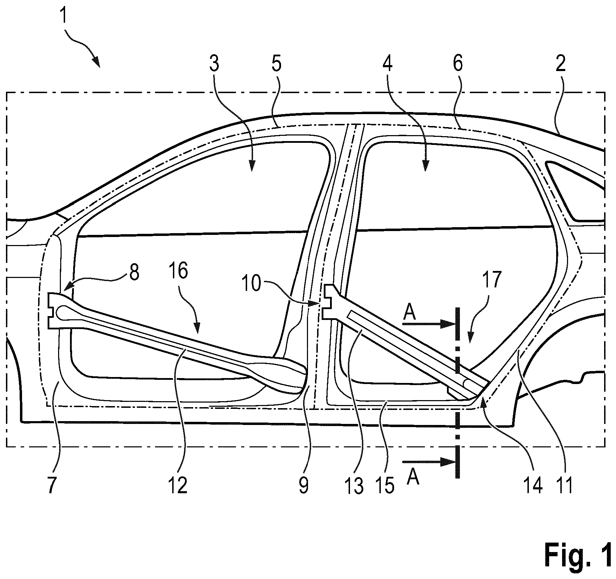

Figur 1 zeigt in einer vereinfachten Seitenansicht ein vorteilhaftes Kraftfahrzeug 1, von dem hier im Wesentlichen nur eine Karosserie 2 gezeigt ist. Die Karosserie 2 weist zwei rahmenförmige Türöffnungen 3, 4 auf, welchen jeweils eine Tür 5 beziehungsweise 6 zuordenbar beziehungsweise zugeordnet ist. In der Figur 1 sind die Türen 5, 6 im Wesentlichen durchsichtig gezeigt, um die vorteilhafte Ausbildung darstellen zu können. Die Tür 5 ist an einer ersten Fahrzeugsäule 7, insbesondere A-Säule, durch ein oder mehrere Schwenkgelenke 8 verschwenkbar gelagert. Die Tür 6 ist an einer zweiten Fahrzeugsäule 9, insbesondere B-Säule, durch ein oder mehrere Schwenkgelenke 10 verschwenkbar gelagert. In der geschlossenen Stellung der Tür 5 liegt diese außerdem an der zweiten Fahrzeugsäule 9an und die Tür 6 liegt in der geschlossenen Stellung an einer dritten Fahrzeugsäule 11, insbesondere C-Säule, des Kraftfahrzeugs 1 an, um die jeweilige Türöffnung zu verschließen.

Beide Türen 5, 6 weisen jeweils ein Crashelement 12, 13 auf. Die Crashelemente 12, 13 sind jeweils als Crashrohe oder Crashstreben ausgebildet, die sich jeweils zumindest im Wesentlichen über die gesamte Länge der jeweiligen Tür 5, 6 erstrecken. Dabei ist ein erstes Ende 14 des Crashelements 13 in der Schließstellung der Tür dem Übergang der Fahrzeugsäule 11 zu einem Längsträger 15 der Karosserie 2 zugeordnet. Das Crashelement 13 endet somit in dem Knick beziehungsweise in der Ecke, in welcher sich die Fahrzeugsäule 11 und der Längsträger 15 treffen. Entsprechendes gilt für das Crashelement 12, das in dem Übergang der Fahrzeugsäule 9 zu dem Längsträger 15 endet. Die Crashelemente 13, 12 sind dabei insbesondere jeweils geneigt zu dem Längsträger 15 derart ausgerichtet, dass sie mit dem jeweils ersten Ende 14 im Übergang der jeweiligen Fahrzeugsäule 10, 11 zu dem Längsträger 15 enden, um mit dem zweiten Ende etwa auf halber Höhe der Tür an der jeweils gegenüberliegenden Fahrzeugsäule 7, 9. Dadurch liegt das jeweils zweite Ende des jeweiligen Crashelements 12, 13 beispielsweise auf Höhe oder benachbart zu einem der Schwenkgelenke 8, 10, oder zwischen den Schwenkgelenken 8, 10.

Die Crashelemente 12, 13 sind Teil jeweils einer Sicherheitseinrichtung 16, 17 des Kraftfahrzeugs 1. Weil die Sicherheitseinrichtungen 16, 17 grundsätzlich gleich ausgebildet sind, wird im Folgenden mit Bezug auf die Sicherheitserrichtung 17 die Ausbildung beider Sicherheitseinrichtungen 16, 17 näher erläutert.

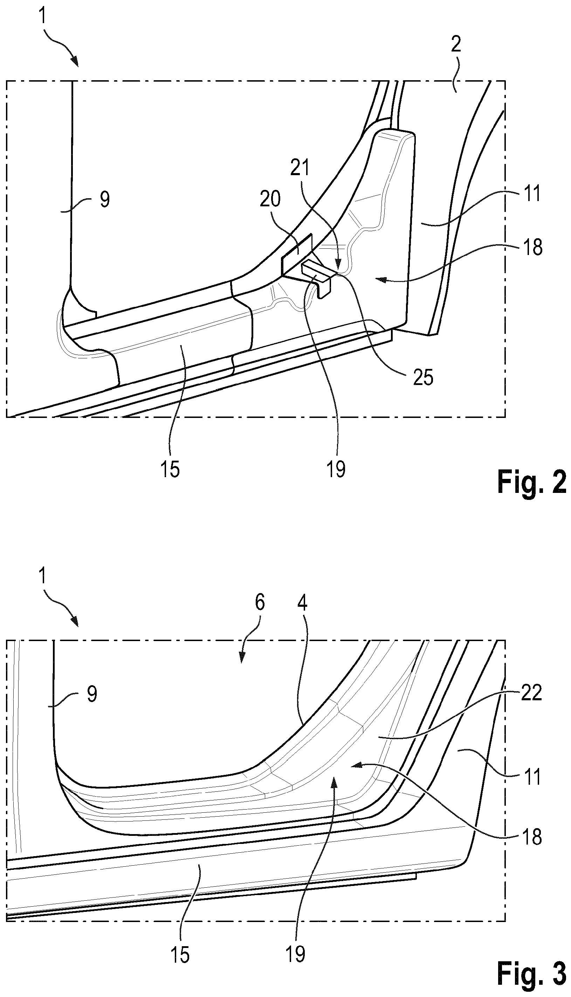

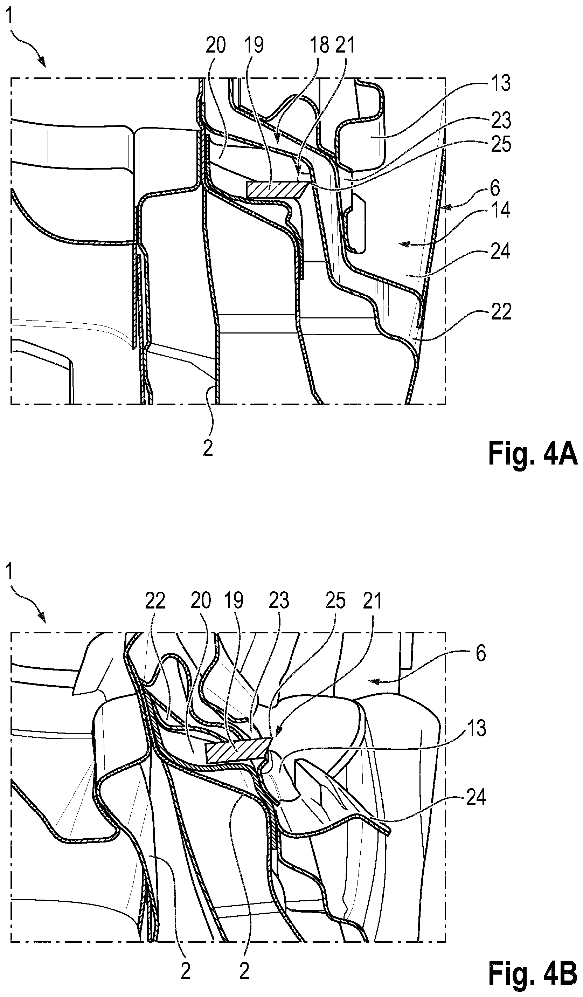

Figur 2 zeigt eine Detailansicht der Karosserie 2 des Kraftfahrzeugs 1 in einer Detailansicht der Sicherheitseinrichtung 17. Gezeigt sind die Fahrzeugsäule 11 und der Längsträger 15. In dem Übergangsbereich ist ein Halteabschnitt 18 der Karosserie 2 ausgebildet, der im geschlossenen Zustand der Tür 4 in dem ersten Ende 14 des Crashelements 13 gegenüberliegt. In dem Halteabschnitt 18 ist ein Crashbolzen 19 angeordnet. Der Crashbolzen 19 ist entweder direkt oder mithilfe eines Verstärkungselements 20 an der Karosserie 2 befestigt. Der Crashbolzen 19 steht seitlich, insbesondere horizontal, von der Karosserie an dem Halteabschnitt 18 in Richtung der Tür 6, insbesondere in Richtung des Endes 14 des Crashelements 13, vor, wie beispielsweise in Figur 4A gezeigt, sodass er mit seinem freien Ende 21 der Tür 4 zugewandt ist. Das freie Ende 21 liegt damit beabstandet zu der Karosserie 2 und steht von dem Halteabschnitt 18 vor.

Figur 3 zeigt dieselbe Detailansicht von Figur 2 mit dem Unterschied, dass nunmehr die Karosserie 2 mit einem Verkleidungsteil 22 versehen ist. Das Verkleidungsteil 22, insbesondere Verkleidungsblech, überdeckt die Karosserie 2 und den Crashbolzen 19, sodass der Crashbolzen 19 versteckt hinter dem Verkleidungsteil 22 liegt und somit von außen nicht erkennbar ist.

Figuren 4A und 4B zeigen eine Schnittdarstellung entlang der Linie A-A aus Figur 1 durch den Bereich der Sicherheitseinrichtung 17, in welchem der Crashbolzen 19 liegt. In Figur 4A ist neben der Karosserie 2 auch das Verkleidungselements 22 gezeigt, das den Crashbolzen 19 verdeckt. Dazu verläuft das Verkleidungselement 22 zumindest im Bereich des Crashbolzens 19 beabstandet zu dem Halteabschnitt 18, sodass das freie Ende 21 des Crashbolzens 19 beabstandet zu dem Verkleidungsteil 22 liegt.

Das Crashelement 13 weist an seinem dem Crashbolzen 19 gegenüberliegenden Ende 14 eine Aussparung 23 auf, die gemäß dem vorliegenden Ausführungsbeispiel als Öffnung beziehungsweise Durchbruch in dem Crashelement 13 ausgebildet ist. Die Aussparung 23 weist eine Innenkontur auf, die etwas größer ist als die Außenkontur des Crashbolzens 19. In der geschlossenen Stellung der Tür 4 liegt die Aussparung 23 dem freien Ende 21 des Crashbolzens 19 gegenüber. Die Tür 6 weist ein Innenverkleidungsteil 24 auf, das das Crashelement 13 an der Türinnenseite überdeckt und versteckt. Damit erstreckt sich das Innenverkleidungsteil 24 auch über die Aussparung 23, sodass diese nicht von außen erkennbar ist. Das Innenverkleidungsteil 24 verläuft im Bereich des Halteabschnitt 18 parallel zu dem Verkleidungselement 22, sodass die Tür 6 besonders nahe zu der Karosserie 2 in der Schließstellung anordenbar ist. In der Schließstellung verbleibt vorzugsweise, wie in Figur 4A gezeigt, ein Spalt zwischen dem Innenverkleidungsteil 24 und dem Verkleidungsteil 22.

Bei einem Seitencrash beziehungsweise bei einem Seitenaufprall im Bereich der Tür 6 ergibt sich nun die folgende Funktion der Sicherheitseinrichtung 17, wie insbesondere mittels Figur 4B gezeigt.

Figur 4B zeigt beispielhaft die Sicherheitseinrichtung 17 im aktivierten beziehungsweise deformierten Zustand nach einem Seitencrash. Durch den Seitencrash wird die Tür 6 in Richtung des Innenraums des Kraftfahrzeugs 1 mit einer Kraft beaufschlagt, durch welche die Tür 6 verformt wird. Dabei wird insbesondere das Crashelement 13 in den Fahrzeuginnenraum gedrängt, wodurch auch das freie Ende 14 in Richtung des Crashbolzens 19 verlagert wird. Ist die durch den Seitenaufprall erzeugte Kraft ausreichend groß, wird das Crashelement 13 derart gegen den Halteabschnitt 18 verlagert und gedrückt, dass der Crashbolzen 19 das Verkleidungsteil 22 und das Innenverkleidungsteil 24 zerschneidet und in die Aussparung 23 des Crashelements 13 geschoben wird. Hierzu weist der Crashbolzen 19 bevorzugt an seinem freien Ende 21 eine Schneidkante 25 auf, die dazu ausgebildet ist, das Verkleidungsteil 22 und das Verkleidungsteil 24 bei einem derartigen Aufprall beziehungsweise Seitencrash zu zerschneiden. Durch das Eingreifen des Crashbolzens 19 in der Aussparung 23 wird nunmehr eine formschlüssige Verbindung zwischen dem Crashelement 13 beziehungsweise der Tür 6 und dem Crashbolzen 19 beziehungsweise der Karosserie 2 hergestellt, durch welche die Tür 6 an dem Crashbolzen 19 an dem von dem Schwenkgelenk 10 fernen Ende arretiert und an einem Eindrücken in den Fahrzeuginnenraum gehindert wird.

Durch die Sicherheitseinrichtung 17 wird somit gewährleistet, dass bei einem Seitencrash die Tür 6 nicht in den Fahrzeuginnenraum bewegt werden kann. Hierdurch wird das Verletzungsrisiko für Fahrzeuginsassen vorteilhaft reduziert. Durch die versteckte Anordnung des Befestigungsbolzens und auch der Aussparung 23 wird erreicht, dass die Sicherheitseinrichtung 17 zum einen nicht optisch in Erscheinung tritt, und dass sich zum anderen Personen beim Ein- oder Aussteigen an dem Befestigungsbolzen nicht verletzen und ihre Kleidung nicht beschädigen können.

Während das vorliegende Ausführungsbeispiel eine nur verschwenkbare Tür 6 betrifft, ist gemäß einem weiteren, hier nicht dargestellten Ausführungsbeispiel vorgesehen, dass die Tür verschiebbar an der Karosserie 2 des Fahrzeugs, insbesondere an dem Längsträger 15, gelagert ist. Dabei ist zumindest ein Crashbolzen 19 dann bevorzugt im Übergangsbereich beziehungsweise im Übergang zwischen einer der Fahrzeugsäulen 7, 9, 11 und dem Längsträger 15 angeordnet.

### Bezugszeichenliste

- 1: Kraftfahrzeug
- 2: Karosserie
- 3: Türöffnung
- 4: Türöffnung
- 5: Tür
- 6: Tür
- 7: Fahrzeugsäule
- 8: Schwenkgelenk
- 9: Fahrzeugsäule
- 10: Schwenkgelenk
- 11: Fahrzeugsäule
- 12: Crashelement
- 13: Crashelement
- 14: Ende
- 15: Längsträger
- 16: Sicherheitseinrichtung
- 17: Sicherheitseinrichtung
- 18: Halteabschnitt
- 19: Crashbolzen
- 20: Verstärkungselement
- 21: Ende
- 22: Verkleidungselement
- 23: Aussparung
- 24: Verkleidungsteil
- 25: Schneidkante

## Patentansprüche

1. Sicherheitseinrichtung (17) für ein Fahrzeug, insbesondere Kraftfahrzeug (1), mit einer Tür (6), die an einer Karosserie (2) des Fahrzeugs verlagerbar angeordnet ist, mit einem seitlich von der Karosserie (2) an einem Halteabschnitt (18) in Richtung der Tür (6) vorstehenden Crashbolzen (19) und mit einer an der Tür (6) angeordneten und zur bereichsweisen Aufnahme des Crashbolzens (19) ausgebildeten Aussparung (23), wobei der Crashbolzen (19) an der Karosserie (2) befestigt und an der Tür (6) ein sich zumindest im Wesentlichen über die Länge der Tür erstreckendes Crashelement (13) angeordnet ist, das dazu ausgebildet ist, sich bei einem Seitencrash mit einem ersten Ende (14), das die Aussparung (23) aufweist, an dem Halteabschnitt (18) der Karosserie (2) abzustützen, **dadurch gekennzeichnet, dass** an der Karosserie (2) ein Verkleidungsteil (22) angeordnet ist, das den Crashbolzen (19) verdeckt und von dem Crashbolzen (19) bei einem Seitencrash durchdringbar ist, sodass der Crashbolzen (19) in die Aussparung (23) gelangt.

2. Sicherheitseinrichtung nach Anspruch 1, **dadurch gekennzeichnet, dass** an der Tür (6) ein Innenverkleidungsteil (22) angeordnet ist, das das Crashelement (13) verdeckt und von dem Crashbolzen (19) bei einem Seitencrash durchdringbar ist, sodass der Crashbolzen (19) in die Aussparung (23) gelangt.

3. Sicherheitseinrichtung nach Anspruch 2, **dadurch gekennzeichnet, dass** das Verkleidungsteil (22) zumindest in dem Halteabschnitt (18) zumindest im Wesentlichen parallel zu dem Innenverkleidungsteil (24) der Tür verläuft.

4. Sicherheitseinrichtung nach Anspruch 2 oder 3, **dadurch gekennzeichnet, dass** der Crashbolzen (19) eine der Tür (6) zugewandte Schneidkante (25) zum Schneiden des Verkleidungselements (22) und/oder des Innenverkleidungsteils (24) bei einem Seitencrash aufweist.

5. Sicherheitseinrichtung nach einem der vorhergehenden Ansprüche, **dadurch gekennzeichnet, dass** der Crashbolzen (19) an oder in der Nähe von einer Fahrzeugsäule (11) angeordnet ist.

6. Sicherheitseinrichtung nach einem der vorhergehenden Ansprüche, **dadurch gekennzeichnet, dass** die Tür (6) an einer ersten Fahrzeugsäule (10) verschwenkbar gelagert und der Crashbolzen (19) an einer zu der ersten Fahrzeugsäule benachbarten zweiten Fahrzeugsäule (11) des Fahrzeugs angeordnet ist.

7. Sicherheitseinrichtung nach einem der vorhergehenden Ansprüche, **dadurch gekennzeichnet, dass** der Crashbolzen (19) im Übergang der Fahrzeugsäule (11) zu einem Längsträger (15) liegt.

8. Sicherheitseinrichtung nach einem der vorhergehenden Ansprüche, **dadurch gekennzeichnet, dass** das Crashelement (19) geneigt zu dem Längsträger (15) ausgerichtet ist.

9. Fahrzeug, insbesondere Kraftfahrzeug (1), mit einer Sicherheitseinrichtung (17) nach einem der Ansprüche 1 bis 8.

## Claims

1. Safety device (17) for a vehicle, in particular a motor vehicle (1), comprising a door (6) which is movably arranged on a body (2) of the vehicle, a crash bolt (19) on a retaining portion (18), which crash bolt projects laterally from the body (2) in the direction of the door (6), and comprising a recess (23) which is arranged on the door (6) and is designed to partially receive the crash bolt (19), the crash bolt (19) being attached to the body (2) and a crash element (13), which extends at least substantially over the length of the door, being arranged on the door (6), which crash element is designed to support itself with a first end (14), which has the recess (23), on the retaining portion (18) of the body (2) in the event of a side crash, **characterized in that** a paneling part (22) is arranged on the body (2), which paneling part conceals the crash bolt (19) and can be penetrated by the crash bolt (19) in the event of a side crash, so that the crash bolt (19) enters the recess (23).

2. Safety device according to claim 1, **characterized in that** an inner paneling part (22) is arranged on the door (6), which inner paneling part covers the crash element (13) and can be penetrated by the crash bolt (19) in the event of a side crash, so that the crash bolt (19) enters the recess (23).

3. Safety device according to claim 2, **characterized in that** the paneling part (22) extends at least substantially in parallel with the inner paneling part (24) of the door, at least in the retaining portion (18).

4. Safety device according to claim 2 or claim 3, **characterized in that** the crash bolt (19) has a cutting edge (25) facing the door (6) for cutting the paneling element (22) and/or the inner paneling part (24) in the event of a side crash.

5. Safety device according to any of the preceding claims,
**characterized in that** the crash bolt (19) is arranged on or near a vehicle pillar (11).

6. Safety device according to any of the preceding claims,
**characterized in that** the door (6) is pivotably mounted on a first vehicle pillar (10) and the crash bolt (19) is arranged on a second vehicle pillar (11) of the vehicle, which is adjacent to the first vehicle pillar.

7. Safety device according to any of the preceding claims,
**characterized in that** the crash bolt (19) is located at the transition of the vehicle pillar (11) to a longitudinal member (15).

8. Safety device according to any of the preceding claims, **characterized in that** the crash element (19) is inclined with respect to the longitudinal member (15).

9. Vehicle, in particular a motor vehicle (1), comprising a safety device (17) according to any of claims 1 to 8.

## Revendications

1. Dispositif de sécurité (17) pour un véhicule, en particulier un véhicule automobile (1), comportant une portière (6) qui est disposée de manière à pouvoir être déplacée sur une carrosserie (2) du véhicule, comportant une tige de collision (19) faisant saillie latéralement de la carrosserie (2) sur une section de maintien (18) en direction de la portière (6) et comportant un évidement (23) disposé sur la portière (6) et réalisé pour recevoir dans certaines zones la tige de collision (19), dans lequel la tige de collision (19) est fixée à la carrosserie (2) et un élément de collision (13) s'étendant au moins sensiblement sur la longueur de la portière est disposé sur la portière (6), lequel élément de collision est réalisé pour s'appuyer, en cas de collision latérale, par une première extrémité (14) qui présente l'évidement (23), sur la section de maintien (18) de la carrosserie (2),
**caractérisé en ce qu'**une pièce d'habillage (22) est disposée sur la carrosserie (2), laquelle habille la tige de collision (19) et peut être traversée par la tige de collision (19) en cas de collision latérale, de sorte que la tige de collision (19) atteint l'évidement (23).

2. Dispositif de sécurité selon la revendication 1, **caractérisé en ce qu'**une pièce d'habillage intérieur (22) est disposée sur la portière (6), laquelle pièce d'habillage intérieur habille l'élément de collision (13) et peut être traversée par la tige de collision (19) en cas de collision latérale, de sorte que la tige de collision (19) atteint l'évidement (23).

3. Dispositif de sécurité selon la revendication 2, **caractérisé en ce que** la pièce d'habillage (22) s'étend au moins dans la section de maintien (18) au moins sensiblement parallèlement à la pièce d'habillage intérieur (24) de la portière.

4. Dispositif de sécurité selon la revendication 2 ou 3,
**caractérisé en ce que** la tige de collision (19) présente une arête de coupe (25) tournée vers la portière (6) pour la coupe de l'élément d'habillage (22) et/ou de l'élément d'habillage intérieur (24) en cas de collision latérale.

5. Dispositif de sécurité selon l'une des revendications précédentes, **caractérisé en ce que** la tige de collision (19) est disposée sur ou à proximité d'un montant de véhicule (11).

6. Dispositif de sécurité selon l'une des revendications précédentes, **caractérisé en ce que** la portière (6) est montée pivotante sur un premier montant de véhicule (10) et la tige de collision (19) est disposée sur un second montant de véhicule (11) du véhicule, adjacent au premier montant de véhicule.

7. Dispositif de sécurité selon l'une des revendications précédentes, **caractérisé en ce que** la tige de collision (19) se trouve dans la transition entre le montant de véhicule (11) et un longeron (15).

8. Dispositif de sécurité selon l'une des revendications précédentes, **caractérisé en ce que** l'élément de collision (19) est orienté de manière inclinée par rapport au longeron (15).

9. Véhicule, en particulier véhicule automobile (1), comportant un dispositif de sécurité (17) selon l'une des revendications 1 à 8.
